# EUROPÄISCHE PATENTSCHRIFT

(11) **EP 3 559 770 B1**
(45) Veröffentlichungstag und Bekanntmachung des Hinweises auf die Patenterteilung: **25.08.2021**
(21) Anmeldenummer: 17825442.1
(22) Anmeldetag: 14.12.2017
(51) Int. Cl.: G05D 1/02

(54) **VERFAHREN ZUM BETRIEB EINES SICH SELBSTTÄTIG FORTBEWEGENDEN REINIGUNGSGERÄTES SOWIE EIN SOLCHES REINIGUNGSGERÄT**
METHOD FOR OPERATING AN AUTOMATICALLY MOVING CLEANING DEVICE AND CLEANING DEVICE OF THIS TYPE
PROCÉDÉ DE FONCTIONNEMENT D'UN APPAREIL DE NETTOYAGE À DÉPLACEMENT AUTOMATIQUE AINSI QU'UN TEL APPAREIL DE NETTOYAGE

(30) Priorität: 22.12.2016 DE 102016125358
(43) Veröffentlichungstag der Anmeldung: 30.10.2019
(73) Patentinhaber: Vorwerk & Co. Interholding GmbH, 42275 Wuppertal (DE)
(72) Erfinder: LISS, Raphael, 53225 Bonn (DE)
(74) Vertreter: Müller, Enno
(86) Internationale Anmeldenummer: PCT/EP2017/082730
(87) Internationale Veröffentlichungsnummer: WO 2018/114550

(56) Entgegenhaltungen:
- EP-A1- 2 977 843
- WO-A1-2010/114235
- DE-A1-102015 105 211
- US-A1- 2006 293 810

## Beschreibung

### Gebiet der Technik

Die Erfindung betrifft ein sich selbsttätig fortbewegendes Reinigungsgerät mit einem Gerätegehäuse, mindestens einer Hindernisdetektionseinrichtung und einer Steuereinrichtung zum Steuern des Reinigungsgerätes innerhalb einer Umgebung in Abhängigkeit von einem Detektionsergebnis der Hindernisdetektionseinrichtung, wobei die Hindernisdetektionseinrichtung zumindest teilweise beweglich an dem Gerätegehäuse gelagert ist.

Des Weiteren betrifft die Erfindung ein Verfahren zum Betrieb eines sich selbsttätig fortbewegenden Reinigungsgerätes, wobei mindestens eine Hindernisdetektionseinrichtung Hindernisse in einer Umgebung des Reinigungsgerätes detektiert, wobei eine Position und/oder Orientierung des Reinigungsgerätes innerhalb der Umgebung bestimmt wird, und wobei sich das Reinigungsgerät in Abhängigkeit von einem Detektionsergebnis der Hindernisdetektionseinrichtung innerhalb der Umgebung fortbewegt.

### Stand der Technik

Sich selbsttätig fortbewegende Reinigungsgeräte sowie Verfahren zum Betrieb solcher Reinigungsgeräte sind im Stand der Technik bekannt. Bei den Reinigungsgeräten kann es sich beispielsweise um Saug- und/oder Wischroboter handeln.

Derartige Reinigungsgeräte können sich selbsttätig innerhalb einer Umgebung fortbewegen und dabei Reinigungsaufgaben ausführen. Für eine Navigation und Selbstlokalisierung weisen die Reinigungsgeräte eine Hindernisdetektionseinrichtung auf, welche Messdaten zur Erstellung einer Karte der Umgebung liefert und während einer Fortbewegung des Reinigungsgerätes Kollisionen mit Hindernissen verhindert.

Die Veröffentlichungen DE 10 2011 000 536 A1 und DE 10 2008 014 912 A1 zeigen beispielsweise Saug- und/oder Reinigungsroboter zur Abreinigung von Fußböden. Diese Roboter sind mit einem Abstandssensor ausgestattet, um beispielsweise eine Kollision mit einem in einem Verfahrweg stehenden Hindernis oder dergleichen zu vermeiden. Der Abstandssensor arbeitet berührungslos, beispielsweise mit Hilfe von Licht- und/oder Ultraschall.

Der Abstandssensor ist entweder unbeweglich an dem Reinigungsgerät angeordnet, so dass dieser eine relativ zu der Verfahrrichtung des Reinigungsgerätes stets kontante Erfassungsrichtung aufweist, oder beweglich, so dass der Abstandssensor beispielsweise durch kontinuierliche Rotation während einer Fortbewegung des Reinigungsgerätes eine 360°-Abstandsmessung ausführt.

Obwohl sich diese Reinigungsgeräte im Stand der Technik bewährt haben, ist der Erfassungsbereich entweder fest mit dem Gerätegehäuse gekoppelt oder wird gleichförmig rotiert, so dass gegebenenfalls ein toter Winkel entstehen kann.

Aus der DE 10 2015 105 211 A1 ist es bekannt, bei einem Reinigungsgerät einen dreidimensional schwenkbaren Laserdistanzsensor zur Vermessung eines Raumes vorzusehen. Diese Vermessung wird unabhängig von einer Position und/oder Orientierung des Reinigungsgerätes vorgenommen. Weiter ist es aus der WO 2010/114235 A1 bekannt, an einem Reinigungsgerät eine Kamera um einen vorbestimmten Winkel in linker oder rechter Richtung oder aufwärts oder abwärts bewegbar vorzusehen. Diese Bewegung und Aufnahme der Bilder erfolgt ohne Einwirkung einer Steuerungseinrichtung im Hinblick auf eine Position und/oder Orientierung des Reinigungsgerätes. Schließlich ist es aus der EP 2 977 843 A1 bekannt, eine Bilderfassungseinrichtung horizontal oder vertikal drehbar an einem Roboter vorzusehen. Eine Kombination der Bilderfassung mit der Steuerungseinrichtung abhängig von einer Position und/oder Orientierung des Roboters erfolgt aber nicht.

### Zusammenfassung der Erfindung

Ausgehend von dem vorgenannten Stand der Technik ist es daher Aufgabe der Erfindung, ein sich selbsttätig fortbewegendes Reinigungsgerät so weiter zu entwickeln, dass Hindernisse noch zuverlässiger detektiert und vermieden werden können.

Zur Lösung dieser Aufgabe wird zunächst ein sich selbsttätig fortbewegendes Reinigungsgerät nach Anspruch 1 vorgeschlagen

Gemäß der Erfindung ist die Hindernisdetektionseinrichtung nun an eine aktuelle Position und/oder Orientierung des Reinigungsgerätes anpassbar, wobei ein Erfassungsbereich der Hindernisdetektionseinrichtung so veränderbar ist, dass Hindernisse gezielt dort detektiert werden können, wo das Reinigungsgerät sich gerade hinbewegt oder in Kürze hinbewegen wird. Der Erfassungsbereich der Hindernisdetektionseinrichtung wird somit korrespondierend zu einer aktuellen Position und/oder Orientierung des Reinigungsgerätes verlagert, insbesondere in Richtung einer aktuellen oder in Kürze folgenden Verfahrrichtung des Reinigungsgerätes. Je nach der Art und dem Aufbau der Hindernisdetektionseinrichtung kann dabei entweder die Hindernisdetektionseinrichtung als Ganzes relativ zu dem Gerätegehäuse bewegt werden, oder nur einzelne Komponenten der Hindernisdetektionseinrichtung, welche einen Einfluss auf den Ort des Erfassungsbereiches haben, beispielsweise nur ein Sensor der Hindernisdetektionseinrichtung. Somit sichert die Hindernisdetektionseinrichtung nicht nur einen Verfahrweg des Reinigungsgerätes in üblicher Vorwärtsrichtung ab, sondern kann Hindernisse auch bei einer Kurvenfahrt zeitnah und zuverlässig erfassen. Somit entsteht eine Funktionsweise der beweglichen Hindernisdetektionseinrichtung, welche einem adaptiven Kurvenfahrlicht bei Kraftfahrzeugen ähnelt. Der Erfassungsbereich der Hindernisdetektionseinrichtung kann somit einer sich aktuell oder in Kürze ändernden Fortbewegungsrichtung des Reinigungsgerätes vorauseilen, so dass Hindernisse frühzeitig erkannt und vermieden werden können.

Insbesondere wird vorgeschlagen, dass die Hindernisdetektionseinrichtung einen Sender zum Emittieren eines Signals und einen Empfänger zum Empfangen eines an einem Hindernis reflektierten Signals aufweist, wobei der Sender und/oder der Empfänger und/oder eine dem Sender und/oder dem Empfänger zugeordnete Signalumlenkeinrichtung relativ zu dem Gerätegehäuse bewegbar sind. Die Hindernisdetektionseinrichtung weist beispielsweise den Aufbau eines Abstandssensors auf, welcher ein Signal in die Umgebung des Reinigungsgerätes aussendet und bei Anwesenheit eines Hindernisses in Emissionsrichtung ein reflektiertes Signal empfängt. Aus einer Laufzeitmessung, Interferenz- und/oder Triangulationsmessung kann dann ein Abstand der Hindernisdetektionseinrichtung bzw. des Reinigungsgerätes zu dem gemessenen Hindernis berechnet werden. Im Sinne einer Bewegung der Hindernisdetektionseinrichtung zur Verlagerung des Erfassungsbereiches kann dabei auch eine Verlagerung nur des Senders, nur des Empfängers oder nur der Signalumlenkeinrichtung vorgesehen sein, sofern sich dadurch der Erfassungsbereich der Hindernisdetektionseinrichtung verlagern lässt. Wesentlich ist dabei nur, dass der Empfänger ein Signal empfangen kann, welches von dem Sender emittiert und an einem Hindernis reflektiert wurde. Insbesondere kann dem Sender und/oder dem Empfänger auch eine Signalumlenkeinrichtung zugeordnet sein. Diese Signalumlenkeinrichtung kann beispielsweise einen Spiegel, ein Prisma, einen Strahlteiler oder andere optische Komponenten aufweisen, welche entweder ausschließlich oder u.a. eine Richtungsumlenkung des Signals auf dem Weg von dem Sender zu dem Empfänger bzw. von dem Empfänger zu dem Sender bewirken können. Insbesondere können sich dabei auch Ausführungsformen ergeben, bei welchen der Sender und/oder der Empfänger und/oder die Signalumlenkeinrichtung relativ zu dem Gerätegehäuse bewegbar sind. Das auf ein Hindernis treffende Signal kann dabei alternativ zu einer Bewegung des Senders auch durch eine Bewegung der Signalumlenkeinrichtung, beispielsweise der Bewegung eines Spiegels, abgelenkt werden. Dies kann insbesondere dann vorteilhaft sein, wenn der Sender unbeweglich in das Gerätegehäuse eingebettet ist, aufgrund von Größe und/oder elektrischer Kontaktierung nur unvorteilhaft zu bewegen ist oder dergleichen.

Es wird vorgeschlagen, dass die Hindernisdetektionseinrichtung mindestens einen Ultraschallsensor und/oder einen optischen Sensor und/oder eine Kamera aufweist. Die Hindernisdetektionseinrichtung funktioniert somit auf der Basis von Ultraschall oder Licht. Insbesondere kann der Ultraschallsensor oder der optische Sensor als Abstandssensor ausgebildet sein, welcher wie zuvor erläutert einen Sender und einen Empfänger aufweist, die in der Art zusammenwirken, dass ein von dem Sender ausgesendetes Ultraschall- oder Lichtsignal an einem Hindernis reflektiert wird und dann auf den Empfänger trifft. Alternativ kann die Hindernisdetektionseinrichtung jedoch auch eine Kamera aufweisen, welche beweglich an dem Gerätegehäuse angeordnet ist und ein Bild der Umgebung des Reinigungsgerätes aufnimmt, welches beispielsweise mit Referenzbildern verglichen wird, um ein Hindernis in der Umgebung des Reinigungsgerätes detektieren zu können. Grundsätzlich kann die Hindernisdetektionseinrichtung auch unterschiedliche Arten von Sensoren gleichzeitig aufweisen, u.a. auch eine Kombination aus unterschiedlichen Sensoren, beispielsweise einem Ultraschallsensor, zwei optischen Sensoren und einer Kamera. Diese können sich ggf. so ergänzen, dass eine Genauigkeit der Hindernisdetektion optimiert wird. Der optische Sensor kann beispielsweise ein CCD- oder CMOS-Chip sein, eine Fotodiode oder eine sonstige lichtsensitive Messeinrichtung.

Des Weiteren wird vorgeschlagen, dass die Hindernisdetektionseinrichtung relativ zu dem Gerätegehäuse verlagerbar und/oder verschwenkbar ist. Insbesondere wird dabei vorgeschlagen, dass die Hindernisdetektionseinrichtung bei einer für einen Reinigungsbetrieb üblichen Orientierung des Reinigungsgerätes horizontal und/oder vertikal verlagerbar und/oder verschwenkbar ist. Die Hindernisdetektionseinrichtung bzw. ein Element der Hindernisdetektionseinrichtung, wie beispielsweise ein Sender, ein Empfänger und/oder eine Signalumlenkeinrichtung, können somit horizontal und/oder vertikal verlagerbar und/oder verschwenkbar an dem Gerätegehäuse angeordnet sein, so dass diese ähnlich wie bei einem adaptiven Kurvenfahrlicht, welches bei Kraftfahrzeugen bekannt ist, ihren Erfassungsbereich verlagern können. Somit ist es möglich, eine aktive Bewegung der Hindernisdetektionseinrichtung nicht nur für eine horizontale Kurvenfahrt vorzusehen, sondern beispielsweise auch bei einem vertikalen Verkippen des Reinigungsgerätes. Dadurch kann der Erfassungsbereich der Hindernisdetektionseinrichtung auch bei vertikaler Neigung angepasst werden, so dass die Hindernisdetektionseinrichtung immer im Rahmen einer maximal möglichen Erfassungsreichweite arbeiten kann. Dadurch ist insgesamt eine optimale Erfassung der Umgebung des Reinigungsgerätes möglich, insbesondere auch eine Erfassung mit einer geringen Anzahl von Hindernisdetektionseinrichtungen. Die Steuereinrichtung des Reinigungsgerätes ist dabei in der Art mit der Hindernisdetektionseinrichtung verknüpft, dass die Bewegung der Hindernisdetektionseinrichtung nach der Art eines adaptiven Kurvenfahrlichts funktioniert. Insbesondere kann die Steuereinrichtung so eingerichtet sein, dass bei einer Kurvenfahrt des Reinigungsgerätes eine oder mehrere Hindernisdetektionseinrichtungen in Richtung der Kurve vorausschauen. Des Weiteren kann, wenn ein an dem Reinigungsgerät angeordneter Lagesensor erkennt, dass das Reinigungsgerät aktuell eine Rampe herunterfährt oder herunterschaut, eine Hindernisdetektionseinrichtung so eingestellt werden, dass diese nach wie vor in einer waagerechten Ebene detektiert oder in Abhängigkeit von einer aktuellen Orientierung auf der Rampe beispielsweise bis zu 30° nach oben bzw. nach unten detektiert, wobei dieser Winkelbereich von bis zu +/- 30° auf die Ebene der Rampe bezogen ist. Hierdurch kann vermieden werden, dass die Hindernisdetektionseinrichtung durch die Neigung ein Hindernis nicht erkennen kann, und dann plötzlich, wenn das Reinigungsgerät hinter der Rampe wieder waagerecht ausgerichtet ist, unmittelbar vor dem Hindernis steht. Des Weiteren kann die Steuereinrichtung so eingerichtet sein, dass der Erfassungsbereich der Hindernisdetektionseinrichtung einem sich relativ zu dem Reinigungsgerät bewegenden Hindernis folgt, so dass sich das Hindernis stets innerhalb des Erfassungsbereiches befindet. Dadurch können Gegenstände, insbesondere bei Annäherung an das Reinigungsgerät, nicht mehr in einem toten Winkel verschwinden. Insbesondere können dadurch Hindernisse sowohl im Nahbereich als auch im Fernbereich optimal detektiert werden. Des Weiteren kann die Steuereinrichtung beispielsweise auch eingerichtet sein, einen Zeitpunkt und/oder eine Geschwindigkeit und/oder eine Richtung einer Bewegung der Hindernisdetektionseinrichtung in Abhängigkeit von einem Zeitpunkt und/oder einer Fortbewegungsgeschwindigkeit und/oder Fortbewegungsrichtung des Reinigungsgerätes zu steuern. Somit kann die Hindernisdetektionseinrichtung situativ und/oder angepasst an eine definierte Fortbewegungsroute des Reinigungsgerätes optimal gesteuert werden.

Des Weiteren wird vorgeschlagen, dass das Reinigungsgerät zusätzlich zu der beweglichen Hindernisdetektionseinrichtung eine unbeweglich an dem Gerätegehäuse angeordnete weitere Messeinrichtung aufweist. Diese weitere Messeinrichtung kann beispielsweise ein fest an dem Gerätegehäuse angeordneter Ultraschallsensor oder optischer Sensor sein. Die unbewegliche Messeinrichtung weist einen Erfassungsbereich auf, welcher stets eine konstante Position relativ zu dem Gerätegehäuse des Reinigungsgerätes beibehält. Gemäß dieser Ausgestaltung kann das Reinigungsgerät eine oder auch mehrere bewegliche Hindernisdetektionseinrichtungen und eine oder mehrere unbeweglich an dem Gerätegehäuse angeordnete weitere Messeinrichtungen aufweisen, wobei bei einer üblicherweise mehrfachen Anordnung solcher Einrichtungen sinnvolle Teilmengen eine aktive Bewegbarkeit aufweisen können, während beispielsweise andere Einrichtungen unbeweglich sind. Insbesondere können beispielsweise bezogen auf eine Fortbewegungsrichtung seitlich an dem Reinigungsgerät angeordnete Sensoren oder mittig frontal in Fortbewegungsrichtung an dem Reinigungsgerät angeordnete Sensoren fest und unbeweglich mit dem Gerätegehäuse verbunden sein. Insbesondere bietet es sich auch an, dass eine unbewegliche Messeinrichtung zwischen zwei beweglichen Hindernisdetektionseinrichtungen angeordnet ist, wobei der Erfassungsbereich der unbeweglichen Messeinrichtung einen toten Winkel zwischen den beiden beweglichen Hindernisdetektionseinrichtungen abdeckt.

Es kann vorgesehen sein, dass das Reinigungsgerät mehrere Hindernisdetektionseinrichtungen aufweist, welche unabhängig voneinander bewegbar sind. Durch diese Ausgestaltung können die an dem Reinigungsgerät angeordneten Hindernisdetektionseinrichtungen und Messeinrichtungen höchst variabel miteinander kombiniert werden, wobei sich vorteilhaft stets nur eine solche Hindernisdetektionseinrichtung situativ bewegt, welche zum Detektieren eines Hindernisses in einer aktuellen Fortbewegungsrichtung oder in Kürze folgenden Fortbewegungsrichtung des Reinigungsgerätes geeignet ist. Andere Hindernisdetektionseinrichtungen bzw. auch die ohnehin unbeweglich an dem Gerätegehäuse angeordneten Messeinrichtungen können hingegen mit relativ zu dem Gerätegehäuse ortsfestem Erfassungsbereich betrieben werden.

Gemäß einer weiteren Ausführungsform wird vorgeschlagen, dass mehrere Hindernisdetektionseinrichtungen gemeinsam auf einem relativ zu dem Gerätegehäuse beweglich gelagerten, insbesondere rotatorisch an dem Gerätegehäuse gelagerten, Halter angeordnet sind. Diese Ausgestaltung dient einer vorteilhaften gleichzeitigen und gleichgerichteten Bewegung mehrerer Hindernisdetektionseinrichtungen. Dazu können beispielsweise mehrere Hindernisdetektionseinrichtungen an einem Halter, beispielsweise einem Gehäuseteil des Gerätegehäuses, wie einem Stoßfänger oder dergleichen, angeordnet sein, so dass diese bei einer Bewegung des Halters gleichförmig mit bewegt werden. Dadurch kann ein Sensorsystem aus mehreren Hindernisdetektionseinrichtungen eine Gesamtbewegung erfahren. Beispielsweise kann eine rotatorische Bewegung des Gesamtsystems mittels eines Elektromotors bewirkt werden. Insbesondere kann beispielsweise ein ringförmiger Halter um das Gerätegehäuse des Reinigungsgerätes herumgelegt und rotatorisch gelagert sein, so dass sich mit dem Halter gleichzeitig auch alle Hindernisdetektionseinrichtungen relativ zu dem Gerätegehäuse bewegen.

Neben dem zuvor beschriebenen Reinigungsgerät wird mit der Erfindung ebenso ein Verfahren zum Betrieb eines sich selbsttätig fortbewegenden Reinigungsgerätes vorgeschlagen, insbesondere ein Verfahren zum Betrieb eines zuvor beschriebenen Reinigungsgerätes, wobei mindestens eine Hindernisdetektionseinrichtung Hindernisse in einer Umgebung des Reinigungsgerätes detektiert, wobei eine Position und/oder Orientierung des Reinigungsgerätes innerhalb der Umgebung bestimmt wird, und wobei sich das Reinigungsgerät in Abhängigkeit von einem Detektionsergebnis der Hindernisdetektionseinrichtung innerhalb der Umgebung fortbewegt, wobei die Hindernisdetektionseinrichtung bei und/oder zeitlich vor einer Änderung einer Fortbewegungsrichtung des Reinigungsgerätes so relativ zu dem Gerätegehäuse bewegt wird, dass ein Erfassungsbereich der Hindernisdetektionseinrichtung im Wesentlichen in die neue Fortbewegungsrichtung zeigt, und/oder dass die Hindernisdetektionseinrichtung bei Detektion eines Hindernisses so bewegt wird, dass ein Erfassungsbereich der Hindernisdetektionseinrichtung dem Hindernis auch bei fortschreitender Fortbewegung des Reinigungsgerätes folgt.

Das Verfahren umfasst zunächst Verfahrensschritte zum Kartenerstellen und Selbstlokalisieren des Reinigungsgerätes innerhalb der erstellten Karte, wodurch eine Navigation des Reinigungsgerätes innerhalb der Umgebung möglich wird. Insbesondere kann dieses Verfahren ein sogenanntes SLAM-Verfahren (Simultaneous Localization And Mapping) beinhalten. Im Sinne der Erfindung gibt es nun mehrere Möglichkeiten. Zum einen kann vorteilhaft eine Fortbewegungsroute des Reinigungsgerätes innerhalb der Umgebung vorbestimmt sein, d.h. ein Weg, welchen das Reinigungsgerät nehmen und dabei gegebenenfalls Reinigungsaufgaben ausführen soll. Da dem Reinigungsgerät, d.h. insbesondere dessen Steuereinrichtung, die Fortbewegungsroute somit bekannt ist, kann die Bewegung der Hindernisdetektionseinrichtung bereits zeitlich vor der Bewegung des Reinigungsgerätes erfolgen. In dem Fall, dass die Fortbewegungsroute beispielsweise eine Kurve beinhaltet, hat die Steuereinrichtung eine Information darüber, an welchem Ort innerhalb der Umgebung sich das Reinigungsgerät in die Kurve hineinbewegen wird. In Abhängigkeit davon kann die Steuereinrichtung dann eine Bewegung einer oder mehrerer Hindernisdetektionseinrichtungen derart veranlassen, dass der Erfassungsbereich der jeweiligen Hindernisdetektionseinrichtung frühzeitig in die neue Fortbewegungsrichtung zeigt. Besonders vorteilhaft eilt der Erfassungsbereich der Hindernisdetektionseinrichtung der neuen Fortbewegungsrichtung des Reinigungsgerätes voraus, so dass das Reinigungsgerät nicht von plötzlich auftauchenden Hindernissen überrascht wird, sondern vielmehr im Voraus, d.h. vor einer Änderung seiner Orientierung, eine Information erhält, falls beispielsweise plötzlich ein Hindernis in der geplanten Fortbewegungsroute steht. Somit kann die Steuereinrichtung die Bewegung, in diesem Fall beispielsweise die Kurvenfahrt, des Reinigungsgerätes stoppen oder im Voraus löschen und eine alternative Verfahrstrategie verfolgen. Des Weiteren kann eine Hindernisdetektionseinrichtung in dem Fall, dass sie ein Hindernis detektiert, so bewegt werden, dass ihr Erfassungsbereich dem Hindernis folgt. Bei relativ zu dem Gerätegehäuse unbeweglichen Hindernisdetektionseinrichtungen würde das Hindernis bei fortschreitender Fortbewegung des Reinigungsgerätes und/oder des Hindernisses üblicherweise aus dem Erfassungsbereich herauswandern, beispielsweise in einen toten Winkel, wo das Hindernis nicht mehr detektiert werden könnte. Durch die erfindungsgemäße Ausgestaltung wird nun der Erfassungsbereich der Hindernisdetektionseinrichtung der Bewegung des Reinigungsgerätes nachgeführt, so dass das Hindernis weiterhin detektiert werden kann. Insgesamt beinhaltet das Verfahren zum Betrieb des Reinigungsgerätes somit eine individuelle Verlagerung des Erfassungsbereiches eines oder mehrerer Hindernisdetektionseinrichtungen, um Hindernisse im Bereich des Reinigungsgerätes zuverlässig detektieren zu können. Dabei kann zum einen beispielsweise ein Erfassungsbereich zeitlich vor Einleitung eines Fahrmanövers, insbesondere vor einer Kurvenfahrt, des Reinigungsgerätes verlagert werden, damit Hindernisse in der geänderten Fortbewegungsroute detektiert werden können, oder zum anderen ein Erfassungsbereich so verlagert werden, dass dieser einem relativ zu dem Reinigungsgerät bewegten Hindernis folgt.

Des Weiteren wird vorgeschlagen, dass ein Zeitpunkt und/oder eine Geschwindigkeit und/oder eine Richtung einer Bewegung der Hindernisdetektionseinrichtung in Abhängigkeit von einem Zeitpunkt und/oder einer Fortbewegungsgeschwindigkeit und/oder einer Fortbewegungsrichtung des Reinigungsgerätes variiert wird. Eine Bewegung der Hindernisdetektionseinrichtung und damit auch eine Verlagerung eines Erfassungsbereiches der Hindernisdetektionseinrichtung kann dadurch beispielsweise mit Funktionsparametern des Antriebs des Reinigungsgerätes verknüpft werden. Funktionsparameter des Antriebs sind dabei beispielsweise eine Fortbewegungsgeschwindigkeit und/oder eine Fortbewegungsrichtung, welche beispielsweise mit Hilfe eines Drehzahlmessers und/oder mittels Odometrie gemessen werden können. Beispielsweise ist es möglich, dass die Bewegung der Hindernisdetektionseinrichtung schneller vollzogen wird, wenn sich das Reinigungsgerät mit höherer Geschwindigkeit fortbewegt. Des Weiteren kann die Bewegungsrichtung der Hindernisdetektionseinrichtung an eine Änderung einer Fortbewegungsrichtung des Reinigungsgerätes angepasst werden, so dass der Erfassungsbereich der Hindernisdetektionseinrichtung dorthin verlagert wird, wo das Reinigungsgerät sich aktuell oder in Kürze hinbewegt. Des Weiteren kann ein Zeitpunkt einer Bewegung der Hindernisdetektionseinrichtung so gesteuert werden, dass die Bewegung der Hindernisdetektionseinrichtung erfolgt, bevor das Reinigungsgerät ein Fahrmanöver, wie beispielsweise eine Kurvenfahrt, vollzieht. Somit kann die Hindernisdetektionseinrichtung auch Hindernisse in einer Fortbewegungsrichtung detektieren, in welche sich das Reinigungsgerät erst in Kürze fortbewegen wird. Die Verknüpfungen zwischen den Bewegungen des Reinigungsgerätes und den Bewegungen der Hindernisdetektionseinrichtung werden dabei mittels einer Steuereinrichtung gesteuert, deren Software entsprechend programmiert ist.

Schließlich wird vorgeschlagen, dass ein Fortbewegungsweg des Reinigungsgerätes im Voraus festgelegt wird, wobei die Hindernisdetektionseinrichtung während einer anschließenden Fortbewegung des Reinigungsgerätes entlang des festgelegten Fortbewegungsweges zeitlich vor einer festgelegten Änderung einer Fortbewegungsrichtung so bewegt wird, dass ein Erfassungsbereich der Hindernisdetektionseinrichtung in die neue Fortbewegungsrichtung weist. Bei dieser besonders bevorzugten Ausführungsform wird zeitlich vor einer Fortbewegung des Reinigungsgerätes eine Fortbewegungsroute innerhalb der Umgebung festgelegt. Die Fortbewegungsroute ist durch eine Hintereinanderanordnung von beispielsweise Geradeausfahrten und Kurvenfahrten gekennzeichnet, welche jeweils an einem vorbestimmten Ort und/oder zu einem vorbestimmten Zeitpunkt innerhalb des Fortbewegungsplans auftreten. In Abhängigkeit von dieser determinierten Fortbewegungsroute bzw. einem damit korrespondierenden Zeitplan kann ein Bewegungsmuster für ein oder mehrere Hindernisdetektionseinrichtungen erstellt werden, welches jeweils einen Ort und/oder eine Erfassungsrichtung eines Erfassungsbereiches der Hindernisdetektionseinrichtung so beeinflusst, dass Hindernisse zeitlich vor einer entsprechenden Bewegung des Reinigungsgerätes vorausschauend wahrgenommen werden können und sich das Reinigungsgerät beispielsweise erst gar nicht an diesen Ort und/oder in diese Fortbewegungsrichtung bewegt, sondern um das Hindernis herum.

Im Sinne eines sich selbsttätig fortbewegenden Reinigungsgerätes ist gemäß der Erfindung grundsätzlich jegliche Art von Reinigungsgerät gemeint, die sich selbsttätig innerhalb einer Umgebung orientieren und fortbewegen kann und dabei Arbeitstätigkeiten ausführt. Insbesondere ist hier an Roboter gedacht, welche beispielsweise eine Saug- und/oder Wischaufgabe ausführen, eine Bodenfläche bearbeiten oder einen Rasen mähen. Des Weiteren kann ein solches Reinigungsgerät jedoch auch zusätzlich eine Funktion aufweisen, die die Überwachung eines Zustands der Umgebung des Reinigungsgerätes ermöglicht, beispielweise im Sinne eines Rauch- und/oder Einbruchsmelders.

### Kurze Beschreibung der Zeichnungen

Im Folgenden wird die Erfindung anhand von Ausführungsbeispielen näher erläutert. Es zeigen:
- Fig. 1: Ein Reinigungsgerät in einer perspektivischen Ansicht von außen,
- Fig. 2: ein Reinigungsgerät in einer Ansicht von oben,
- Fig. 3a: das Reinigungsgerät gemäß Fig. 2 beim Befahren einer Rampe vor einer Verlagerung eines Erfassungsbereiches einer Hindernisdetektionseinrichtung,
- Fig. 3b: das Reinigungsgerät gemäß Fig. 3a nach einer Verlagerung des Erfassungsbereiches,
- Fig. 4a: das Reinigungsgerät bei einer Vorbeifahrt an einem Hindernis vor einer Verlagerung eines Erfassungsbereiches einer Hindernisdetektionseinrichtung,
- Fig. 4b: das Reinigungsgerät gemäß Fig. 4a nach einer Verlagerung des Erfassungsbereiches,
- Fig. 5a: ein Reinigungsgerät bei einer Fortbewegung auf ein Hindernis zu vor einer Verlagerung eines Erfassungsbereiches einer Hindernisdetektionseinrichtung,
- Fig. 5b: das Reinigungsgerät gemäß Fig. 5a nach einer Verlagerung des Erfassungsbereiches.

### Beschreibung der Ausführungsformen

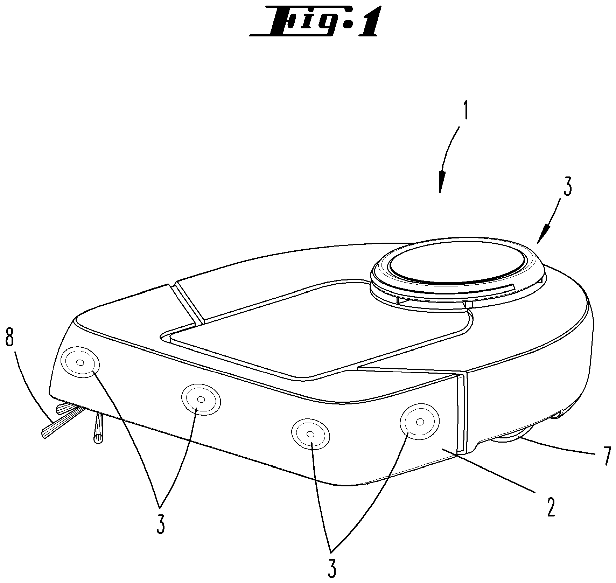

Fig. 1 zeigt ein Reinigungsgerät 1, welches hier als sich selbsttätig fortbewegender Saugroboter ausgebildet ist. Das Reinigungsgerät 1 weist ein Gerätegehäuse 2 auf, an welchem unterseitig, einer zu reinigenden Fläche zugewandt, elektromotorisch angetriebene Räder 7 sowie eine über die Unterkante eines Gehäusebodens hinausragende, gleichfalls elektromotorisch angetriebene Bürste 8 angeordnet sind. Weiter weist das Reinigungsgerät 1 im Bereich der Bürste 8 eine nicht weiter dargestellte Saugmundöffnung auf, über welche mittels einer Motor-Gebläse-Einheit mit Sauggut beaufschlagte Luft in das Reinigungsgerät 1 eingesaugt werden kann. Für die Elektroversorgung der einzelnen Elektrokomponenten des Reinigungsgerätes 1, beispielsweise für den Antrieb der Räder 7 und der Bürste 8 und darüber hinaus weiter vorgesehener Elektronik, weist das Reinigungsgerät 1 einen nicht dargestellten, wieder aufladbaren Akkumulator auf.

Das Reinigungsgerät 1 weist eine Mehrzahl von Hindernisdetektionseinrichtungen 3 auf, welche zur Detektion von Hindernissen 4 innerhalb einer Umgebung des Reinigungsgerätes 1 ausgebildet sind. Jede Hindernisdetektionseinrichtung 3 verfügt über einen Erfassungsbereich 6, innerhalb welchem vorhandene Hindernisse 4 detektiert werden können. Eine erste Hindernisdetektionseinrichtung 3 ist hier beispielsweise eine Triangulationsmesseinrichtung, welche Abstände zu Hindernissen 4 innerhalb der Umgebung des Reinigungsgerätes 1 messen kann. Ein Sensor dieser Hindernisdetektionseinrichtung 3 weist im Einzelnen eine Laserdiode auf, deren emittierter Lichtstrahl über eine Umlenkeinrichtung aus dem Gerätegehäuse 2 des Reinigungsgerätes 1 herausgeführt und um eine in der gezeigten Orientierung des Reinigungsgerätes 1 senkrechte Drehachse rotierbar ist, insbesondere mit einem Messwinkel von 360°. Dadurch ist eine Rundum-Abstandsmessung um das Reinigungsgerät 1 herum möglich. Mit Hilfe dieser Hindernisdetektionseinrichtung 3 kann die Umgebung des Reinigungsgerätes 1 in einer bevorzugt horizontalen Ebene vermessen werden, d.h. in einer im Wesentlichen zu der zu reinigenden Fläche parallelen Ebene. Dadurch kann das Reinigungsgerät 1 unter Vermeidung einer Kollision mit Hindernissen 4 in der Umgebung bewegt werden. Die mittels dieser Hindernisdetektionseinrichtung 3 aufgenommenen Messdaten, welche Abstände zu Hindernissen 4 und/oder Wänden in der Umgebung darstellen, werden zur Erstellung einer Karte der Umgebung genutzt. Ergänzend können zur Erstellung der Umgebungskarte auch Odometriedaten der Räder 7 genutzt werden, welche zur Verifizierung der mittels der Triangulationsmesseinrichtung gemessenen Daten dienen. Die als Triangulationsmesseinrichtung ausgebildete Hindernisdetektionseinrichtung 3 erfüllt hier somit zwei Aufgaben gleichzeitig, nämlich zum einen das Abscannen der Umgebung des Reinigungsgerätes 1 zum Aufbau einer Karte der Umgebung, und zum anderen die Detektion von Hindernissen 4 im Sinne einer Kollisionsvermeidung.

Das Reinigungsgerät 1 verfügt des Weiteren über mehrere Hindernisdetektionseinrichtungen 3, die als Ultraschall-Abstandssensoren ausgebildet sind und in einen bezogen auf eine Hauptbewegungsrichtung des Reinigungsgerätes 1 frontalen Gehäuseteilbereich des Gerätegehäuses 2 eingebettet sind. In der Darstellung gemäß Fig. 1 sind vier dieser Hindernisdetektionseinrichtungen 3 erkennbar, wobei eine weitere Hindernisdetektionseinrichtung 3 in der gezeigten Perspektive durch das Gerätegehäuse 2 verdeckt ist. Insgesamt weist das Reinigungsgerät 1 somit fünf solche als Ultraschall-Abstandssensoren ausgebildete Hindernisdetektionseinrichtungen 3 auf, nämlich drei frontal an dem Gerätegehäuse und jeweils eine Hindernisdetektionseinrichtung 3 seitlich dazu, hier im Wesentlichen in zwei senkrecht zueinander stehenden Ebenen.

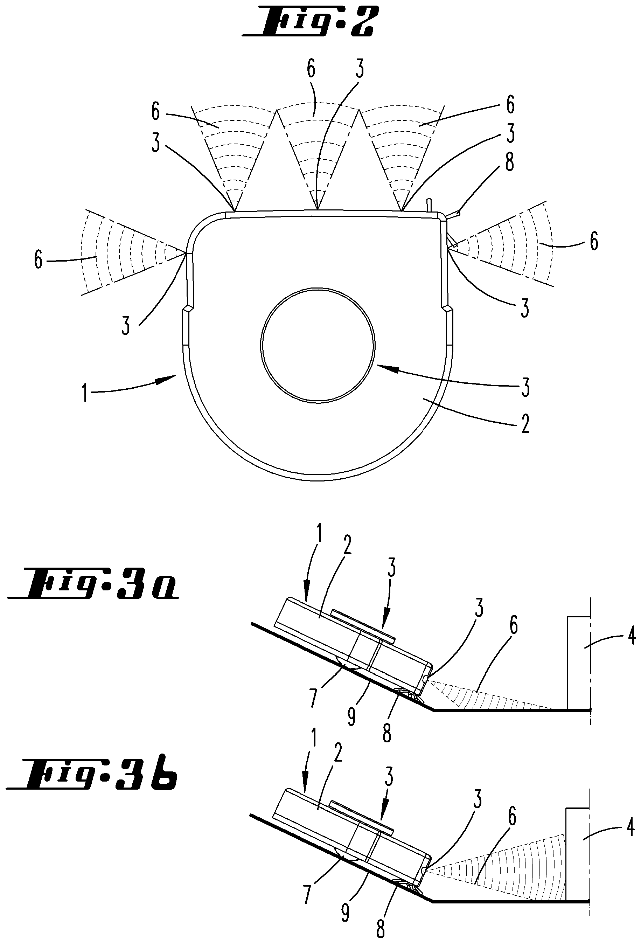

Fig. 2 zeigt das Reinigungsgerät 1 in einer Draufsicht, wobei die drei frontalen Hindernisdetektionseinrichtungen 3 und die beiden seitlichen Hindernisdetektionseinrichtungen 3 hier jeweils mit ihrem Erfassungsbereich 6 dargestellt sind. In der gezeigten Situation weisen die Erfassungsbereiche 6 der frontal angeordneten Hindernisdetektionseinrichtungen 3 jeweils nach vorne, wobei die Winkelhalbierenden der Erfassungsbereiche 6 im Wesentlichen parallel zueinander ausgerichtet sind. In dieser Ausrichtung ergeben sich zum Beispiel Umgebungsteilbereiche an der Front des Reinigungsgerätes 1, welche nicht durch einen oder mehrere Erfassungsbereiche 6 abgedeckt sind. Ein dort anwesendes Hindernis 4 könnte somit nicht von den Hindernisdetektionseinrichtungen 3 detektiert werden, so dass es zu einer Kollision mit dem Hindernis 4 kommen könnte, sofern dieses nicht zuvor bei der Annäherung an das Reinigungsgerät 1 schon detektiert worden wäre. Eine solche Situation kann beispielsweise auftreten, wenn sich das Reinigungsgerät 1 bei langsamer Fortbewegungsgeschwindigkeit oder gar bei Stillstand dreht.

Jeder Hindernisdetektionseinrichtung 3 ist ein Stellmotor zugeordnet, welcher die Hindernisdetektionseinrichtung so bewegen kann, dass sich deren Erfassungsbereich 6 verlagert. Dabei muss nicht die gesamte Hindernisdetektionseinrichtung 3 bewegt werden, sondern genügt vielmehr beispielsweise auch die Bewegung einer Signalumlenkeinrichtung, welche ein von dem Sender ausgesendetes Signal ablenkt bzw. ein von dem Empfänger empfangenes Detektionssignal zurück zu dem Sender führt. Eine solche Signalumlenkeinrichtung kann beispielsweise ein beweglicher Spiegel oder dergleichen sein. Die Bewegung der Hindernisdetektionseinrichtung 3 bzw. eines entsprechenden Teilbereiches dieser wird durch eine Steuereinrichtung des Reinigungsgerätes 1 gesteuert, hier in Abhängigkeit von einer Bewegung des Reinigungsgerätes 1 und/oder einer detektierten Anwesenheit eines Hindernisses 4 in der Umgebung des Reinigungsgerätes 1.

Die Figuren 3a und 3b zeigen das Reinigungsgerät 1 beim Herabfahren einer Rampe 9. In der Fig. 3a ist eine Situation dargestellt, bei welcher der Erfassungsbereich 6 der Hindernisdetektionseinrichtung 3 noch nicht verlagert ist und eine Symmetrieachse des im Wesentlichen kegelförmigen Erfassungsbereichs 6 der Hindernisdetektionseinrichtung 3 in eine Richtung parallel zu der Ebene der Rampe 9 zeigt. Da somit nicht nur das Reinigungsgerät 1 der Rampe 9 folgend nach unten weist, sondern auch der Erfassungsbereich 6 der Hindernisdetektionseinrichtung 3 kann ein hinter der Rampe 9 befindliches Hindernis 4 nicht detektiert werden, da sich dieses außerhalb des Erfassungsbereiches 6 befindet. Wenn das Reinigungsgerät 1 in diesem Fall also die Rampe 9 verlässt, steht dieses plötzlich vor dem Hindernis 4, ohne dieses zuvor detektiert zu haben. Um diesen Fall zu vermeiden, wird der Erfassungsbereich 6 der Hindernisdetektionseinrichtung 3 aktiv verlagert. Dieser Fall ist in Fig. 3b dargestellt. Dort wurde der Erfassungsbereich 6 der Hindernisdetektionseinrichtung 3 so verstellt, dass das Hindernis 4 nun innerhalb des Erfassungsbereiches 6 liegt. Dazu hat die Steuereinrichtung des Reinigungsgerätes 1 beispielsweise mittels eines Neigungssensors erkannt, dass das Reinigungsgerät 1 nicht mehr horizontal ausgerichtet ist, sondern die Rampe 9 herunterfährt. Die Information des Neigungssensors wird von der Steuereinrichtung des Reinigungsgerätes 1 ausgewertet und zur Steuerung eines Motors der Hindernisdetektionseinrichtung 3 so verarbeitet, dass der Erfassungsbereich 6 um einen Winkelbereich verlagert wird, welcher die Neigung der Rampe 9 ausgleicht. Dadurch ergibt sich eine Rückverlagerung des Erfassungsbereiches 6 in eine Richtung, welche einer frontalen, waagerechten Beobachtungrichtung entspricht. Die Hindernisdetektionseinrichtung 3 bzw. ein Teilbereich dieser kann dabei so eingerichtet sein, dass beispielsweise Steigungen bzw. Neigungen von +/- 30° kompensiert werden können.

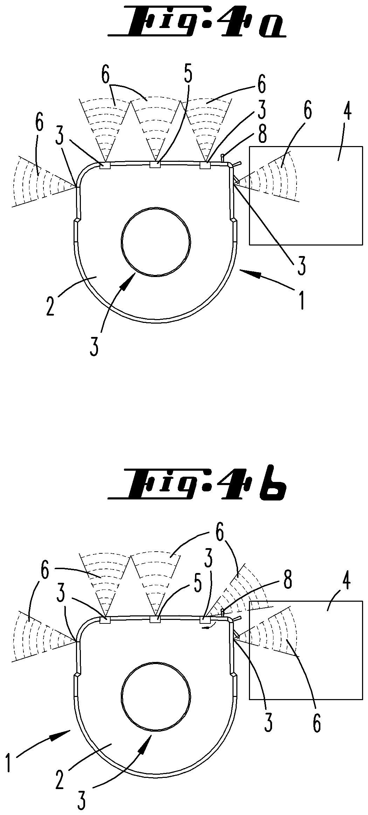

Die Figuren 4a und 4b zeigen ein Reinigungsgerät 1, welches frontal zwei relativ zu dem Gerätegehäuse 2 bewegliche Hindernisdetektionseinrichtungen 3 und eine zwischen diesen angeordnete unbewegliche Messeinrichtung 5 aufweist. Des Weiteren ist jeweils eine bewegliche Hindernisdetektionseinrichtung 3 seitlich an dem Gerätegehäuse 2 angeordnet. Die beweglichen Hindernisdetektionseinrichtungen 3 können so bewegt werden, dass sich deren Erfassungsbereich 6 in Richtung eines Hindernisses 4 verlagert.

In der in Fig. 4a dargestellten Situation fährt das Reinigungsgerät 1 an einem Hindernis 4 vorbei, welches dadurch in den Erfassungsbereich 6 einer seitlich an dem Gerätegehäuse 2 des Reinigungsgerätes 1 angeordneten Hindernisdetektionseinrichtung 3 ragt. Daraufhin wird eine Information über die Anwesenheit des Hindernisses 4 innerhalb des Erfassungsbereiches 6 an die Steuereinrichtung des Reinigungsgerätes 1 übermittelt, welche daraufhin die nächstliegende frontal an dem Reinigungsgerät 1 angeordnete Hindernisdetektionseinrichtung 3 so bewegt, dass sich deren Erfassungsbereich 6 in Richtung des Hindernisses 4 verlagert. Diese Situation ist in Fig. 4b dargestellt, wobei das Hindernis 4 einerseits nach wie vor in den Erfassungsbereich 6 der seitlich angeordneten Hindernisdetektionseinrichtung 3 und andererseits in den Erfassungsbereich 6 der frontal angeordneten Hindernisdetektionseinrichtung 3 ragt. Bei fortgeführter Bewegung des Reinigungsgerätes 1 innerhalb der Umgebung können die Erfassungsbereiche 6 der Hindernisdetektionseinrichtungen 3 analog zu einer relativen Bewegung zwischen dem Hindernis 4 und dem Reinigungsgerät 1 so nachgeführt werden, dass das Hindernis 4 stets zumindest in einem Erfassungsbereich 6 einer Hindernisdetektionseinrichtung 3 liegt.

Alternativ oder zusätzlich zu den beiden zuvor gezeigten Ausführungsbeispielen kann vorgesehen sein, dass eine Hindernisdetektionseinrichtung 3 oder mehrere Hindernisdetektionseinrichtungen 3 in Abhängigkeit von in der Karte der Umgebung gespeicherten Parametern zeitlich im Voraus verlagert werden. Beispielsweise kann eine Reinigungsfahrt mit einer festgelegten Verfahrroute für das Reinigungsgerät 1 definiert sein, welche an bestimmten Hindernissen 4, wie beispielsweise Möbelstücken, Wänden, Türzargen oder dergleichen vorbeiführt. Die Hindernisdetektionseinrichtungen 3 können dabei jeweils so gesteuert werden, dass deren Erfassungsbereich 6 ein bekanntes, am Rande des Verfahrweges liegendes Hindernis 4 detektiert. Des Weiteren kann die Steuereinrichtung des Reinigungsgerätes 1 die Hindernisdetektionseinrichtung 3 auch so steuern, dass deren Erfassungsbereich 6 - beispielsweise kurz bevor das Reinigungsgerät 1 eine Kurvenfahrt vornimmt - in Richtung der Kurve schwenkt, so dass Hindernisse 4, welche evtl. in der durch die Kurve geänderten Richtung des Verfahrweges vorhanden sind, im Voraus detektiert werden und ggf. umfahren werden können. Somit kann die Steuereinrichtung des Reinigungsgerätes 1 den Verfahrweg des Reinigungsgerätes 1 frühzeitig anpassen, um in der Karte noch nicht verzeichnete Hindernisse 4 zu umfahren.

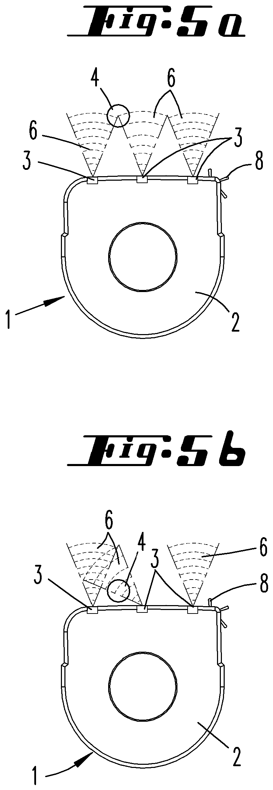

Die Figuren 5a und 5b zeigen schließlich eine weitere Ausführungsform, bei welcher das Reinigungsgerät 1 frontal auf ein Hindernis 4 zufährt. Das Hindernis 4 ist relativ zu der Größe des Reinigungsgerätes 1 und zu dem Erfassungsbereich 6 der Hindernisdetektionseinrichtungen 3 so klein, dass dieses bei einer Ausrichtung der Erfassungsbereiche 6 wie gemäß Fig. 5a bei Annäherung in einem toten Winkel zwischen zwei benachbarten Hindernisdetektionseinrichtungen 3 verschwinden könnte. Dadurch hätte die Steuereinrichtung des Reinigungsgerätes 1 keine Kenntnis darüber, wie weit das Hindernis 4 noch von dem Reinigungsgerät 1 entfernt ist. Daher wird das Hindernis 4 vorteilhaft zunächst aus einer größeren Entfernung von beispielsweise 20 cm von denjenigen Hindernisdetektionseinrichtungen 3 detektiert, in deren Erfassungsbereiche 6 das Hindernis 4 hineinragt. Aufgrund einer Information darüber, in welche der Erfassungsbereiche 6 der Hindernisdetektionseinrichtungen 3 das Hindernis 4 hineinragt, kann eine Bewegung eines oder mehrerer Hindernisdetektionseinrichtungen 3 vorgenommen werden, um den toten Winkel zwischen benachbarten Erfassungsbereichen 6 zu eliminieren. In der Darstellung gemäß Fig. 5b wird die mittlere Hindernisdetektionseinrichtung 3 der drei frontalen Hindernisdetektionseinrichtungen 3 so verlagert, dass deren Erfassungsbereich 6 den toten Winkel übergreift. Bei weitergeführter Fortbewegung des Reinigungsgerätes 1 auf das Hindernis 4 zu tritt das Hindernis 4 somit in den Erfassungsbereich 6 dieser verschwenkten Hindernisdetektionseinrichtung 3 über, so dass stets eine Information über den Abstand zwischen dem Hindernis 4 und dem Gerätegehäuse 2 des Reinigungsgerätes 1 verfügbar ist.

### Liste der Bezugszeichen

- 1: Reinigungsgerät
- 2: Gerätegehäuse
- 3: Hindernisdetektionseinrichtung
- 4: Hindernis
- 5: Messeinrichtung
- 6: Erfassungsbereich
- 7: Rad
- 8: Bürste
- 9: Rampe

## Patentansprüche

1. Sich selbsttätig fortbewegendes Reinigungsgerät (1) mit einem Gerätegehäuse (2), mindestens einer Hindernisdetektionseinrichtung (3) und einer Steuereinrichtung zum Steuern des Reinigungsgerätes (1) innerhalb einer Umgebung in Abhängigkeit von einem Detektionsergebnis der Hindernisdetektionseinrichtung (3), wobei die Hindernisdetektionseinrichtung (3) zumindest teilweise beweglich an dem Gerätegehäuse (2) gelagert ist, so dass ein Erfassungsbereich (6) der Hindernisdetektionseinrichtung (3) relativ zu dem Gerätegehäuse (2) verlagerbar ist, **dadurch gekennzeichnet, dass** die Steuereinrichtung eingerichtet ist, abhängig von einer Position und/oder Orientierung des Reinigungsgerätes (1) den Erfassungsbereich (6) der Hindernisdetektionseinrichtung (3) relativ zu dem Gerätegehäuse (2) zu verlagern, wobei die Steuereinrichtung eingerichtet ist, zu bewirken, dass die Hindernisdetektionseinrichtung (3) bei und/oder zeitlich vor einer Änderung einer Fortbewegungsrichtung des Reinigungsgerätes (1) so relativ zu dem Gerätegehäuse (2) bewegt wird, dass ein Erfassungsbereich (6) der Hindernisdetektionseinrichtung (3) im Wesentlichen in die neue Fortbewegungsrichtung zeigt, und/oder dass die Hindernisdetektionseinrichtung (3) bei Detektion eines Hindernisses (4) so bewegt wird, dass ein Erfassungsbereich (6) der Hindernisdetektionseinrichtung (3) dem Hindernis (4) auch bei fortschreitender Fortbewegung des Reinigungsgerätes (1) folgt.

2. Reinigungsgerät (1) nach Anspruch 1, **dadurch gekennzeichnet, dass** die Hindernisdetektionseinrichtung (3) einen Sender zum Emittieren eines Signals und einen Empfänger zum Empfangen eines an einem Hindernis (4) reflektierten Signals aufweist, wobei der Sender und/oder der Empfänger und/oder eine dem Sender und/oder dem Empfänger zugeordnete Signalumlenkeinrichtung relativ zu dem Gerätegehäuse (2) bewegbar sind.

3. Reinigungsgerät (1) nach Anspruch 1 oder 2, **dadurch gekennzeichnet, dass** die Hindernisdetektionseinrichtung (3) mindestens einen Ultraschallsensor und/oder einen optischen Sensor und/oder eine Kamera aufweist.

4. Reinigungsgerät (1) nach einem der vorhergehenden Ansprüche, **dadurch gekennzeichnet, dass** die Hindernisdetektionseinrichtung (3) relativ zu dem Gerätegehäuse (2) verlagerbar und/oder verschwenkbar ist, wobei die Hindernisdetektionseinrichtung (3) bei einer für einen Reinigungsbetrieb üblichen Orientierung des Reinigungsgerätes (1) insbesondere horizontal und/oder vertikal verlagerbar und/oder verschwenkbar ist.

5. Reinigungsgerät (1) nach einem der vorhergehenden Ansprüche, **dadurch gekennzeichnet, dass** das Reinigungsgerät (1) zusätzlich zu der beweglichen Hindernisdetektionseinrichtung (3) eine unbeweglich an dem Gerätegehäuse (2) angeordnete weitere Messeinrichtung (5) aufweist.

6. Reinigungsgerät (1) nach einem der vorhergehenden Ansprüche, **dadurch gekennzeichnet, dass** das Reinigungsgerät (1) mehrere Hindernisdetektionseinrichtungen (3) aufweist, welche unabhängig voneinander bewegbar sind.

7. Reinigungsgerät (1) nach einem der vorhergehenden Ansprüche, **dadurch gekennzeichnet, dass** mehrere Hindernisdetektionseinrichtungen (3) gemeinsam auf einem relativ zu dem Gerätegehäuse (2) beweglich gelagerten, insbesondere rotatorisch an dem Gerätegehäuse (2) gelagerten, Halter angeordnet sind.

8. Verfahren zum Betrieb eines sich selbsttätig fortbewegenden Reinigungsgerätes (1), insbesondere Verfahren zum Betrieb eines Reinigungsgerätes (1) nach einem der vorhergehenden Ansprüche, wobei mindestens eine Hindernisdetektionseinrichtung (3) Hindernisse (4) in einer Umgebung des Reinigungsgerätes (1) detektiert, wobei eine Position und/oder Orientierung des Reinigungsgerätes (1) innerhalb der Umgebung bestimmt wird, und wobei sich das Reinigungsgerät (1) in Abhängigkeit von einem Detektionsergebnis der Hindernisdetektionseinrichtung (3) innerhalb der Umgebung fortbewegt, **dadurch gekennzeichnet, dass** die Hindernisdetektionseinrichtung (3) bei und/oder zeitlich vor einer Änderung einer Fortbewegungsrichtung des Reinigungsgerätes (1) so relativ zu dem Gerätegehäuse (2) bewegt wird, dass ein Erfassungsbereich (6) der Hindernisdetektionseinrichtung (3) im Wesentlichen in die neue Fortbewegungsrichtung zeigt, und/oder dass die Hindernisdetektionseinrichtung (3) bei Detektion eines Hindernisses (4) so bewegt wird, dass ein Erfassungsbereich (6) der Hindernisdetektionseinrichtung (3) dem Hindernis (4) auch bei fortschreitender Fortbewegung des Reinigungsgerätes (1) folgt.

9. Verfahren nach Anspruch 8, **dadurch gekennzeichnet, dass** ein Zeitpunkt und/oder eine Geschwindigkeit und/oder eine Richtung einer Bewegung der Hindernisdetektionseinrichtung (3) in Abhängigkeit von einem Zeitpunkt und/oder einer Fortbewegungsgeschwindigkeit und/oder einer Fortbewegungsrichtung des Reinigungsgerätes (1) variiert wird.

10. Verfahren nach Anspruch 8 oder 9, **dadurch gekennzeichnet, dass** ein Fortbewegungsweg des Reinigungsgerätes (1) im Voraus festgelegt wird, wobei die Hindernisdetektionseinrichtung (3) während einer anschließenden Fortbewegung des Reinigungsgerätes (1) entlang des festgelegten Fortbewegungsweges zeitlich vor einer festgelegten Änderung einer Fortbewegungsrichtung so bewegt wird, dass ein Erfassungsbereich (6) der Hindernisdetektionseinrichtung (3) in die neue Fortbewegungsrichtung weist.

## Claims

1. An automatically moving cleaning device (1) with a device housing (2), at least one obstacle detection device (3) and a control device for controlling the cleaning device (1) within an environment as a function of a detection result of the obstacle detection device (3), wherein the obstacle detection device (3) is at least partially movably mounted on the device housing (2), so that a detection region (6) of the obstacle detection device (3) can be displaced relative to the device housing (2), **characterized in that** the control device is set up to shift the detection region (6) of the obstacle detection device (3) relative to the device housing (2) depending on a position and/or orientation of the cleaning device (1, wherein the control device is set up to effect, that the obstacle detection device (3) is moved relative to the device housing (2) during and/or chronologically before a change in a direction of movement of the cleaning device (1) in such a way that a detection region (6) of the obstacle detection device (3) essentially points in the new direction of movement, and/or that the obstacle detection device (3) is moved in such a way upon detecting an obstacle (4) that a detection region (6) of the obstacle detection device (3) follows the obstacle (4) even given a continued movement of the cleaning device (1).

2. The cleaning device (1) according to claim 1, **characterized in that** the obstacle detection device (3) has a transmitter for emitting a signal and receiver for receiving a signal reflected by an obstacle (4), wherein the transmitter and/or receiver and/or a signal deflecting device allocated to the transmitter and/or receiver can be moved relative to the device housing (2) .

3. The cleaning device (1) according to claim 1 or 2, **characterized in that** the obstacle detection device (3) has at least one ultrasound sensor and/or an optical sensor and/or a camera.

4. The cleaning device (1) according to one of the preceding claims, **characterized in that** the obstacle detection device (3) can be displaced and/or pivoted relative to the device housing (2), wherein the obstacle detection device (3) can in particular be horizontally and/or vertically displaced and/or pivoted given an orientation of the cleaning device (1) typical for a cleaning operation.

5. The cleaning device (1) according to one of the preceding claims, **characterized in that** the cleaning device (1) has another measuring device (5) immovably arranged on the device housing (2) in addition to the movable obstacle detection device (3).

6. The cleaning device (1) according to one of the preceding claims, **characterized in that** the cleaning device (1) has several obstacle detection devices (3), which can be moved independently of each other.

7. The cleaning device (1) according to one of the preceding claims, **characterized in that** several obstacle detection devices (3) are together arranged on a holder that is movably mounted relative to the device housing (2), in particular rotationally mounted on the device housing (2) .

8. A method for operating an automatically moving cleaning device (1), in particular a method for operating a cleaning device (1) according to one of the preceding claims, wherein at least one obstacle detection device (3) detects obstacles (4) in an environment of the cleaning device (1), wherein a position and/or orientation of the cleaning device (1) within the environment is determined, and wherein the cleaning device (1) moves within the environment as a function of a detection result of the obstacle detection device (3), **characterized in that** the obstacle detection device (3) is moved relative to the device housing (2) during and/or chronologically before a change in a direction of movement of the cleaning device (1) in such a way that a detection region (6) of the obstacle detection device (3) essentially points in the new direction of movement, and/or that the obstacle detection device (3) is moved in such a way upon detecting an obstacle (4) that a detection region (6) of the obstacle detection device (3) follows the obstacle (4) even given a continued movement of the cleaning device (1).

9. The method according to claim 8, **characterized in that** a time and/or speed and/or direction of a movement of the obstacle detection device (3) is varied as a function of a time and/or speed of movement and/or direction of movement of the cleaning device (1).

10. The method according to claim 8 or 9, **characterized in that** a traversing path of the cleaning device (1) is determined in advance, wherein, during a subsequent movement of the cleaning device (1) along the determined movement path, the obstacle detection device (3) is moved chronologically before a determined change in a direction of movement in such a way that a detection region (6) of the obstacle detection device (3) points in the new direction of movement.

## Revendications

1. Appareil de nettoyage à déplacement automatique (1) comprenant un boîtier d'appareil (2), au moins un dispositif de détection d'obstacle (3) et un dispositif de commande pour commander l'appareil de nettoyage (1) à l'intérieur d'un environnement en fonction d'un résultat de détection du dispositif de détection d'obstacle (3), dans lequel le dispositif de détection d'obstacle (3) est monté mobile au boîtier d'appareil (2) au moins en partie de manière qu'une zone de détection (6) du dispositif de détection d'obstacle (3) puisse être déplacée par rapport au boîtier d'appareil (2), **caractérisé en ce que** le dispositif de commande est configuré pour déplacer la zone de détection (6) du dispositif de détection d'obstacle (3) par rapport au boîtier d'appareil (2) en fonction d'une position et/ou d'une orientation de l'appareil de nettoyage (1), dans lequel le dispositif de commande est configuré pour que lors et/ou temporellement avant un changement d'une direction de déplacement de l'appareil de nettoyage (1), le dispositif de détection d'obstacle (3) soit déplacé par rapport au boîtier d'appareil (2) de telle manière qu'une zone de détection (6) du dispositif de détection d'obstacle (3) soit sensiblement dirigée dans la nouvelle direction de déplacement, et/ou **en ce que** le dispositif de détection d'obstacle (3) soit déplacé lors de la détection d'un obstacle (4) de telle manière qu'une zone de détection (6) du dispositif de détection d'obstacle (3) suive l'obstacle (4) même lorsque l'appareil de nettoyage (1) continue à se déplacer.

2. Appareil de nettoyage (1) selon la revendication 1, **caractérisé en ce que** le dispositif de détection d'obstacle (3) présente un émetteur pour l'émission d'un signal et un récepteur pour la réception d'un signal réfléchi sur un obstacle (4), dans lequel l'émetteur et/ou le récepteur et/ou un dispositif de déviation de signal associé à l'émetteur et/ou au récepteur sont mobiles par rapport au boîtier d'appareil (2) .

3. Appareil de nettoyage (1) selon la revendication 1 ou 2, **caractérisé en ce que** le dispositif de détection d'obstacle (3) comprend au moins un capteur à ultrasons et/ou un capteur optique et/ou une caméra.

4. Appareil de nettoyage (1) selon l'une des revendications précédentes, **caractérisé en ce que** le dispositif de détection d'obstacle (3) peut être déplacé et/ou pivoté par rapport au boîtier d'appareil (2), dans lequel le dispositif de détection d'obstacle (3) peut être déplacé et/ou pivoté en particulier horizontalement et/ou verticalement lorsque l'appareil de nettoyage (1) est dans une orientation habituelle pour une opération de nettoyage.

5. Appareil de nettoyage (1) selon l'une des revendications précédentes, **caractérisé en ce que** l'appareil de nettoyage (1) présente, en plus du dispositif mobile de détection d'obstacle (3), un autre dispositif de mesure (5) joint de manière immobile au boîtier de l'appareil (2).

6. Dispositif de nettoyage (1) selon l'une des revendications précédentes, **caractérisé en ce que** le dispositif de nettoyage (1) comprend une pluralité de dispositifs de détection d'obstacle (3) qui sont mobiles indépendamment les uns des autres.

7. Appareil de nettoyage (1) selon l'une des revendications précédentes, **caractérisé en ce qu'**une pluralité de dispositifs de détection d'obstacles (3) sont agencés ensemble sur un support qui est monté mobile par rapport au boîtier d'appareil (2), en particulier monté rotatif au boîtier d'appareil (2).

8. Procédé de fonctionnement d'un appareil de nettoyage à déplacement automatique (1), en particulier procédé de fonctionnement d'un appareil de nettoyage (1) selon l'une des revendications précédentes, dans lequel au moins un dispositif de détection d'obstacle (3) détecte des obstacles (4) dans un environnement de l'appareil de nettoyage (1), dans lequel une position et/ou une orientation de l'appareil de nettoyage (1) dans l'environnement est déterminée, et dans lequel l'appareil de nettoyage (1) se déplace dans l'environnement en fonction d'un résultat de détection du dispositif de détection d'obstacle (3), **caractérisé en ce que** le dispositif de détection d'obstacle (3) est déplacé par rapport au boîtier d'appareil (2) lors et/ou temporellement avant un changement de direction de déplacement de l'appareil de nettoyage (1) de telle manière qu'une zone de détection (6) du dispositif de détection d'obstacle (3) soit dirigée sensiblement dans la nouvelle direction de déplacement, et/ou **en ce que** le dispositif de détection d'obstacle (3) est déplacé lors de la détection d'un obstacle (4) de telle manière qu'une zone de détection (6) du dispositif de détection d'obstacle (3) suive l'obstacle (4) même lorsque l'appareil de nettoyage (1) continue à se déplacer.

9. Procédé selon la revendication 8, **caractérisé en ce qu'**on fait varier un instant et/ou une vitesse et/ou une direction de déplacement du dispositif de détection d'obstacle (3) en fonction d'un instant et/ou d'une vitesse de déplacement et/ou d'une direction de déplacement du dispositif de nettoyage (1).

10. Procédé selon la revendication 8 ou 9, **caractérisé en ce qu'**un trajet de déplacement du dispositif de nettoyage (1) est défini à l'avance, dans lequel pendant un déplacement ultérieur du dispositif de nettoyage (1) le long du trajet de déplacement défini, le dispositif de détection d'obstacle (3) est déplacé temporellement avant un changement défini d'une direction de déplacement de telle manière qu'une zone de détection (6) du dispositif de détection d'obstacle (3) pointe dans la nouvelle direction de déplacement.
